# EUROPÄISCHE PATENTSCHRIFT

(11) **EP 3 819 126 B1**
(45) Veröffentlichungstag und Bekanntmachung des Hinweises auf die Patenterteilung: **26.06.2024**
(21) Anmeldenummer: 20202170.5
(22) Anmeldetag: 16.10.2020
(51) Int. Cl.: B41M 5/00, B41M 7/00, C09D 11/101, C09D 11/38, B41M 3/00, C09D 11/54

(54) **VERFAHREN ZUM DRUCKEN AUF EINE SCHICHT MIT STABILEM RADIKALISCHEM PHOTOINITIATOR**
METHOD OF PRINTING ON A LAYER WITH STABLE RADICAL PHOTOINITIATOR
PROCÉDÉ D'IMPRESSION SUR UNE COUCHE À L'AIDE D'UN PHOTOINITIATEUR RADICAL STABLE

(30) Priorität: 08.11.2019 DE 102019130152
(43) Veröffentlichungstag der Anmeldung: 12.05.2021
(73) Patentinhaber: Heidelberger Druckmaschinen AG, 69115 Heidelberg (DE)
(72) Erfinder: Schlörholz, Dr. Matthias, 68723 Plankstadt (DE)

(56) Entgegenhaltungen:
- WO-A1-2014/032936
- US-A1- 2015 252 202

## Beschreibung

Die vorliegende Erfindung betrifft ein Druckverfahren, in dem man auf eine Schicht druckt, die wenigstens eine Verbindung umfasst, welche ein stabiles Radikal ist oder ein stabiles Radikal bildet, die Verwendung dieses Verfahrens beim Bahnanschluss von mittels Inkjetdrucks gedruckten Bahnen und die Verwendung dieses Verfahrens zur Verbesserung der Haftung von UV-härtbarer Inkjettinte auf Substraten.

In der Druckindustrie sind verschiedene Druckverfahren prinzipiell bekannt, beispielsweise der Offsetdruck, Siebdruck und Inkjetdruck. Als Druckmedien werden in solchen Druckverfahren neben lösungsmittelbasierten Druckmedien, wobei es sich bei dem Lösungsmittel oftmals um Wasser handelt, auch UV-härtbare Druckmedien verwendet, beispielsweise UV-härtbare Druckfarben oder UV-härtbare Inkjettinten. In der Regel werden solche UV-härtbare Druckmedien in der Druckmaschine zunächst auf das Substrat, bei dem es sich beispielsweise um Papier, Karton oder Kunststoff handeln kann, aufgebracht und in ein oder mehreren nachfolgenden Schritten unter Einwirkung von UV- oder Elektronenstrahlung gehärtet. Um die Härtung von UV-härtbaren Druckmedien in zufriedenstellender Weise zu erreichen, ist es prinzipiell bekannt, den UV-härtbaren Druckmedien ein oder mehrere Verbindungen zuzusetzen, welche bei Bestrahlung mit UV-Licht in Radikale zerfallen und dadurch den Härtungsprozess einleiten. Solche bei Bestrahlung mit UV-Licht in Radikale zerfallende Verbindungen sind im Stand der Technik prinzipiell als Photoinitiatoren bekannt.

Die CN 101302257 A beschreibt ein UV-Photoinitiatorsystem zur Härtung von UV-härtbaren Verbindungen, welches ein Hexaarylbisimidazol (HABI) umfasst.

Die DE 29 18 686 A1 beschreibt UV-härtbare Druckfarben, welche ein Photoinitiatorsystem enthalten, das eine Hexaarylbisimidazolylverbindung (HABI) umfasst.

Die WO 2014/032936 A1 beschreibt ein Verfahren zum Drucken, welches ein erstes Druckmedium enthaltend einen Photoinitiator und einen Polymerisationsinhibitor und mindestens ein zweites Druckmedium enthaltend einen Photoinitiator verwendet. Die gedruckten Schichten werden bestrahlt, um eine Härtung dieser Schichten zu bewirken.

Ein bekanntes Problem, das beim Drucken mit UV-härtbaren Druckmedien und insbesondere UV-härtbaren Inkjettinten auftritt, ist das Überdrucken von bereits gehärteten Schichten. Nachdem man eine UV-härtbare Inkjettinte auf ein Substrat gedruckt und gehärtet hat, kommt es beim Überdrucken mit weiterer UV-härtbarer Inkjettinte regelmäßig zu dem Problem der Entnetzung. Dies führt man im Wesentlichen auf die Änderung der Oberflächenenergie der UV-Inkjettinte durch den Härtungsvorgang zurück. Ein weiteres bekanntes Problem beim Drucken mit UV-härtbarer Inkjettinte ist die Neigung der UV-härtbaren Inkjettinte zum Schrumpfen während des Härtungsvorgangs, was dazu führt, dass die gehärtete UV-härtbare Inkjettinte weniger stark auf dem bedruckten Substrat haftet. Diese genannten Probleme sind besonders störend beim Bedrucken von Körpern mittels Inkjetdrucks in Druckmaschinen, wie sie beispielsweise in der EP 3 067 210 A1 beschrieben sind. In solchen Druckmaschinen wird das Druckmotiv angesichts der begrenzten Breite des Inkjetdruckkopfs in der Regel nacheinander in Form einzelner Bahnen auf den oftmals sphärischen Körper aufgedruckt. Dabei tritt bekanntermaßen das Problem auf, dass die Anschlussbereiche der nebeneinanderliegenden oder leicht überlappenden Bahnen oftmals keine perfekte optische Homogenität aufweisen, insbesondere wenn große einfarbige Flächen gedruckt werden.

Zu Verringerung dieser Probleme beim sogenannten Bahnanschluss und dem Übereinanderdrucken verschiedenfarbiger UV-härtbarer Inkjettinten wird daher in der Regel nur eine teilweise Härtung der ersten aufgedruckten Schicht vorgenommen (Pinnen) und erst nach dem Aufdrucken der darüberliegenden oder angrenzenden UV-härtbaren Inkjettintenschicht eine Aushärtung vorgenommen. Dabei ist eine genaue Prozesskontrolle entscheidend für den Erfolg, insbesondere müssen Bestrahlungsdauer und Bestrahlungsintensität beim teilweisen Härten (Pinnen) genau auf die UV-härtbare Inkjettinte abgestimmt werden, um zufriedenstellende Ergebnisse zu erzielen.

Es besteht weiterhin ein Bedarf an alternativen Druckverfahren, mit denen die Probleme des Übereinanderdruckens von UV-härtbaren Inkjettinten, welche insbesondere beim Bahnanschluss bei bahnförmig nebeneinanderliegenden oder teilweise überlappenden Tintenbahnen zum Tragen kommen, verringert werden können. Solche Druckverfahren sollten besonders einfach mit Druckmaschinen wie in der EP 3 067 210 A1 beschrieben ausgeführt werden können.

Es wurde nun gefunden, dass das Bedrucken eines Substrats mit mehreren Schichten UV-härtbarer Inkjettinte vorteilhaft möglich ist, indem man als grundlegende Schicht eine Schicht aufdruckt, welche eine Verbindung umfasst, die ein stabiles Radikal ist oder ein stabiles Radikal bildet. Eine solche Verbindung wirkt aufgrund ihrer stabilen Radikaleigenschaft als Photoinitiator für die darüberliegenden Schichten aus UV-härtbarer Inkjettinte. Erfindungsgemäß wird die Verbindung, die ein stabiles Radikal ist oder ein stabiles Radikal bildet, ausgewählt unter radikalischen organischen N-Oxiden, radikalischen anorganischen N-Oxiden, Kohlenstoffradikalen und radikalischen organischen Stickstoffverbindungen.

Dadurch ist es möglich, beim Aufdrucken von UV-härtbaren Inkjettinten auf eine aufwendige Prozessführung zum teilweisen Härten (Pinnen) der grundlegenden Schicht auf dem Substrat zu verzichten. Durch das erfindungsgemäße Verfahren erhält man Schichten aus UV-härtbarer Inkjettinte, die gut aufeinander haften. Das Problem der Entnetzung übereinanderliegender Schichten aus gehärteter UV-härtbarer Inkjettinte wird verringert. Beim Bedrucken von Körpern in Form von nebeneinanderliegenden oder leicht überlappenden Bahnen lassen sich Druckbilder von hoher optischer Homogenität erreichen, wenn die Bahnen auf eine grundlegende Schicht gedruckt werden, die stabile Radikale als Photoinitiatoren umfasst.

Die vorliegende Erfindung betrifft dementsprechend ein Verfahren zum Drucken wie in Anspruch 1 definiert.

Als Substrate in Schritt i) können prinzipiell alle Arten von Materialien verwendet werden, die in Druckmaschinen verarbeitet werden können. Beispiele sind Papier, Karton und Kunststoffmaterialien, wobei die Kunststoffmaterialien beispielsweise in Form von Folien oder Körpern, insbesondere sphärischen Körpern wie Helmen, Bällen und dergleichen, verwendet werden können.

In Schritt ii) des erfindungsgemäßen Verfahrens bedruckt man das in Schritt i) bereitgestellte Substrat mittels Inkjetdruck mit einer ersten Schicht unter Verwendung eines ersten Druckmediums. Das erste Druckmedium umfasst wenigstens eine Verbindung, die ein stabiles Radikal ist oder ein stabiles Radikal bildet.

Die wenigstens eine Verbindung, die ein stabiles Radikal ist oder ein stabiles Radikal bildet, ist ausgewählt unter radikalischen organischen N-Oxiden, radikalischen anorganischen N-Oxiden, Kohlenstoffradikalen und radikalischen organischen Stickstoffverbindungen. Wenn die wenigstens eine Verbindung ein stabiles Radikal ist, liegt diese unter Umgebungsbedingungen in Form eines Radikals vor. Eine solche Verbindung weist wenigstens ein freies reaktives Elektron auf. Eine solche Verbindung braucht nicht durch Bestrahlung, etwa mit UV-Licht, aus einer nicht-radikalischen Form in eine radikalische Form überführt zu werden. Solche Verbindungen sind dem Fachmann prinzipiell bekannt. Wenn die wenigstens eine Verbindung eine Verbindung ist, die ein stabiles Radikal bildet, so handelt es sich um wenigstens eine Verbindung, die durch Zuführung von Strahlung, insbesondere UV-Strahlung, aus einer nicht-radikalischen Form in eine stabile radikalische Form überführt werden kann. Eine solche Verbindung weist in der radikalischen Form wenigstens ein freies reaktives Elektron auf. Auch solche Verbindungen sind dem Fachmann prinzipiell bekannt.

Als "stabil" im Sinne des erfindungsgemäßen Verfahrens werden solche Radikale verstanden, welche wenigstens während der Dauer des Druckprozesses in Form des freien Radikals vorliegen und die Härtung der Monomere in den UV-härtbaren Inkjettinten bewirken können. Mit anderen Worten werden im Rahmen der vorliegenden Erfindung auch solche Radikale als "stabil" verstanden, welche nach Abschluss des Druckprozesses ihre Radikaleigenschaft etwa durch Nebenreaktionen wieder verlieren, beispielsweise nach Stunden, Tagen oder Wochen.

Organische Verbindungen für das erfindungsgemäße Verfahren, die stabile Radikale sind, sind ausgewählt unter radikalischen organischen N-Oxiden, bevorzugt 2,2,6,6,-Tetramethylpiperidin-1-oxyl (TEMPO), 4-Oxo-2,2,6,6-tetramethylpiperidin-1-oxyl (4-Oxo-TEMPO) und deren Derivaten, Kohlenstoffradikalen, bevorzugt Triphenylmethylradikal und dessen Derivate, und radikalischen organischen Stickstoffverbindungen, bevorzugt 2,2-Diphenyl-1-picrylhydrazyl (DPPH) und dessen Derivate. Anorganische Verbindungen, die stabile Radikale sind, sind ausgewählt unter radikalischen anorganischen N-Oxiden, bevorzugt Kaliumnitrosodisulfonat (Fremys Salz) und dessen Derivate.

Bevorzugte organische Verbindungen für das erfindungsgemäße Verfahren, die stabile Radikale bilden, sind ausgewählt unter konjugierten stickstoffhaltigen Verbindungen, besonders bevorzugt unter konjugierten Bisimidazolen. Besonders bevorzugte konjugierte Bisimidazole sind substituierte und unsubstituierte Hexaarylbisimidazole (HABI). Unter den substituierten und unsubstituierten Hexaarylbisimidazolen (HABI) sind Hexaphenylbisimidazol und o-Chlorhexaphenylbisimidazol und deren Derivate bevorzugt. Weitere bevorzugte substituierte und unsubstituierte Hexaarylbisimidazole (HABI) weisen als Arylgruppen substituiertes oder unsubstituiertes Phenyl, Biphenyl, Naphthyl, Pyridyl, Furanyl oder Thienyl auf. Solche bevorzugten Hexaarylbisimidazole (HABI) sind in der CN 101302257 A aufgelistet, auf die hiermit ausdrücklich Bezug genommen wird.

Das erste Druckmedium, welches die wenigstens eine Verbindung umfasst, die ein stabiles Radikal ist oder ein stabiles Radikal bildet, kann ein oder mehrere Coinitiatoren umfassen. Solche Verbindungen sind dem Fachmann prinzipiell bekannt und dienen dazu, den Härtungsprozess zu beschleunigen. Beispielsweise eignen sich als Coinitiatoren für Hexaarylbisimidazole (HABI) Verbindungen aus der Stoffklasse der Benzophenone, etwa 4,4-Dimethylaminobenzophenon. Geeignete Coinitiatoren sind auch Mercaptotriazole wie beispielsweise 3-Mercapto-1,2,4-triazol. Das erste Druckmedium in Schritt ii) kann auch im Wesentlichen keinen Coinitiator enthalten, wobei dieser dann im zweiten Druckmedium in Schritt iv) enthalten sein kann.

Bei dem ersten Druckmedium in Schritt ii) handelt es sich bevorzugt um eine UV-härtbare Inkjettinte, welcher die wenigstens eine Verbindung zugesetzt wurde, die ein stabiles Radikal ist oder ein stabiles Radikal bildet. Bei dem ersten Druckmedium kann es sich auch um einen UV-härtbaren Primer, also um eine UV-härtbare Grundierung handeln, welche die wenigstens eine Verbindung umfasst, die ein stabiles Radikal ist oder ein stabiles Radikal bildet. UV-härtbare Inkjettinten und UV-härtbare Primer sind dem Fachmann prinzipiell bekannt. Solche Druckmedien umfassen in der Regel ein oder mehrere ein- oder mehrwertige organische Monomere, etwa Acrylate und Methacrylate wie beispielsweise Hexandioldiacrylat, die unter Einwirkung von radikalischen Polymerisationsinitiatoren miteinander reagieren und so gehärtet werden. UV-härtbare Inkjettinten und UV-härtbare Primer können noch weitere Stoffe umfassen, beispielsweise Farbmittel, Gleitmittel, Netzmittel und dergleichen.

Das erste Druckmedium, bevorzugt eine UV-härtbare Inkjettinte, enthält die wenigstens eine Verbindung, die ein stabiles Radikal ist oder ein stabiles Radikal bildet, bevorzugt wenigstens eine der zuvor als bevorzugt genannten, bevorzugt in einer Menge im Bereich von 0,1 bis 30 Gew.-%, besonders bevorzugt im Bereich von 0,5 bis 20 Gew.-% und ganz besonders bevorzugt im Bereich von 1 bis 15 Gew.-%, bezogen auf das gesamte erste Druckmedium.

Das Substrat wird in Schritt ii) mit dem ersten Druckmedium mittels Inkjetdrucks bedruckt. Der Inkjetdruck ist im Stand der Technik prinzipiell bekannt und umfasst das Aufsprühen der Inkjettinte aus einem Reservoir auf das Substrat mittels ein oder mehrerer Inkjetdruckköpfe, welche zahlreiche Druckdüsen in Richtung des Substrats aufweisen.

In Schritt iii) bestrahlt man die in Schritt ii) gedruckte erste Schicht, um wenigstens eine teilweise Härtung der ersten Schicht zu bewirken. In der Regel erfolgt die Bestrahlung mit UV-Licht. Die Intensität der UV-Strahlung, lässt sich in der Druckmaschine üblicherweise steuern, so dass eine teilweise Härtung (Pinnen) oder im Wesentlichen vollständige Härtung der ersten Schicht erreicht werden kann. In einer bevorzugten Ausführungsform bewirkt man in Schritt iii) mittels Bestrahlung mit UV-Licht eine im Wesentlichen vollständige Härtung der ersten Schicht.

In Schritt iv) druckt man wenigstens eine weitere Schicht auf die in Schritt iii) wenigstens teilweise, bevorzugt im Wesentlichen vollständig gehärtete, erste Schicht unter Verwendung eines zweiten Druckmediums. In Schritt iv) des erfindungsgemäßen Verfahrens wird in der Regel ein Druckbild (Motiv) auf die erste Schicht aufgedruckt, welche auch aus mehreren Farben bestehen kann. Dementsprechend druckt man in Schritt iv) in der Regel keine vollflächige Schicht auf. Das Drucken erfolgt in Schritt iv) mittels Inkjetdrucks, wie zuvor bereits als Druckverfahren für Schritt ii) beschrieben. Als zweites Druckmedium sind UV-härtbare Inkjettinten bevorzugt. Das zweite Druckmedium umfasst im Wesentlichen keinen Photoinitiator, insbesondere im Wesentlichen keine Verbindung, die ein stabiles Radikal ist oder ein stabiles Radikal bildet.

Die wenigstens eine Verbindung, die ein stabiles Radikal ist oder ein stabiles Radikal bildet und die in der ersten Schicht auf dem Substrat enthalten ist, kann auch bei vollständiger Härtung der ersten Schicht noch als stabiles Radikal vorliegen oder ein stabiles Radikal bilden und damit als Initiator für die Härtung der darüber aufgedruckten wenigstens einen weiteren Schicht dienen.

In Schritt v) bestrahlt man die in Schritt iv) gedruckte wenigstens eine weitere Schicht, um eine Härtung der wenigstens einen weiteren Schicht zu bewirken. Das Bestrahlen in Schritt v) erfolgt mittels UV-Strahlung oder Elektronenstrahlung, besonders bevorzugt mittels UV-Strahlung. In einer bevorzugten Ausführungsform bewirkt man in Schritt v) eine im Wesentlichen vollständige Härtung der wenigstens einen weiteren Schicht.

In einer bevorzugten Ausführungsform druckt man die erste Schicht in Schritt ii) vollflächig auf das Substrat und die wenigstens eine weitere Schicht in Schritt iv) mittels Inkjetdrucks in Form von wenigstens zwei aneinandergrenzenden oder überlappenden Bahnen auf die vollflächig auf das Substrat aufgetragene, wenigstens teilweise gehärtete erste Schicht. "Vollflächig" heißt in diesem Zusammenhang, dass wenigstens die Fläche, welche im nachfolgenden Schritt mit den Bahnen bedruckt wird, mit der ersten Schicht bedruckt wird.

Ein weiterer Gegenstand der Erfindung ist die Verwendung wie in Anspruch 7 definiert.

Mit dem erfindungsgemäßen Verfahren ist es vorteilhaft möglich, mehrere Schichten aus UV-härtbarer Inkjettinte übereinander auf ein Substrat mittels Inkjetdrucks aufzubringen. Beim Drucken von benachbarten oder überlappenden Bahnen von UV-härtbarer Inkjettinte mittels Inkjetdrucks lässt sich eine hohe optische Homogenität in den Bahnanschlussbereichen erzielen, wenn man die benachbarten oder überlappenden Bahnen mit dem erfindungsgemäßen Verfahren aufdruckt.

## Patentansprüche

1. Verfahren zum Drucken, bei dem man
i) ein Substrat bereitstellt,
ii) das in Schritt i) bereitgestellte Substrat mit einer ersten Schicht unter Verwendung eines ersten Druckmediums mittels Inkjetdrucks bedruckt,
iii) die in Schritt ii) gedruckte erste Schicht mit UV-Strahlunguter bestrahlt, um wenigstens eine teilweise Härtung dieser ersten Schicht zu bewirken,
iv) wenigstens eine weitere Schicht auf die in Schritt iii) wenigstens teilweise gehärtete erste Schicht unter Verwendung eines zweiten Druckmediums mittels Inkjetdrucks druckt, wobei das zweite Druckmedium im Wesentlichen keinen Photoinitiator umfasst, und
v) die in Schritt iv) gedruckte wenigstens eine weitere Schicht mit UV-Strahlung bestrahlt, um eine Härtung dieser wenigstens einen weiteren Schicht zu bewirken,
**dadurch gekennzeichnet,**
**dass** das erste Druckmedium wenigstens eine Verbindung umfasst, die ein stabiles Radikal ist oder ein stabiles Radikal bildet,
wobei das stabile Radikal wenigstens während der Dauer des Druckprozesses in Form des freien Radikals vorliegt,
wobei die wenigstens eine Verbindung, die ein stabiles Radikal ist oder ein stabiles Radikal bildet, ein Photoinitiator ist, und
wobei die wenigstens eine Verbindung, die ein stabiles Radikal ist oder ein stabiles Radikal bildet, ausgewählt ist unter radikalischen organischen N-Oxiden, radikalischen anorganischen N-Oxiden, Kohlenstoffradikalen und radikalischen organischen Stickstoffverbindungen.

2. Verfahren nach Anspruch 1, wobei die wenigstens eine Verbindung, die ein stabiles Radikal ist oder ein stabiles Radikal bildet, ausgewählt ist unter Hexaaiylbisimidazolen (HABI).

3. Verfahren nach einem der vorhergehenden Ansprüche, wobei das zweite Druckmedium im Wesentlichen keine Verbindung umfasst, die ein stabiles Radikal ist oder ein stabiles Radikal bildet.

4. Verfahren nach einem der vorhergehenden Ansprüche, wobei das erste Druckmedium eine UV-härtbare Inkjettinte oder ein UV-härtbarer Primer ist und das zweite Druckmedium eine UV-härtbare Inkjettinte ist.

5. Verfahren nach einem der vorhergehenden Ansprüche, wobei das zweite Druckmedium eine UV-härtbare Inkjettinte ist, welche im Wesentlichen keinen Photoinitiator umfasst.

6. Verfahren nach einem der vorhergehenden Ansprüche, wobei man die erste Schicht in Schritt ii) vollflächig auf das Substrat druckt und die wenigstens eine weitere Schicht in Schritt iv) in Form von wenigstens zwei aneinandergrenzenden oder überlappenden Bahnen auf die vollflächig aufgetragene, wenigstens teilweise gehärtete erste Schicht mittels Inkjetdrucks druckt.

7. Verwendung einer wenigstens teilweise gehärteten Schicht, welche wenigstens eine Verbindung umfasst, die ein stabiles Radikal ist oder ein stabiles Radikal bildet, auf einem Substrat als Untergrund für den Aufdruck von wenigstens zwei Bahnen aus UV-härtbarer Inkjettinte mittels Inkjetdrucks, wobei die wenigstens zwei Bahnen aneinandergrenzen oder überlappen, wobei die UV-härtbare Inkjettinte im Wesentlichen keinen Photoinitiator umfasst,
wobei das stabile Radikal wenigstens während der Dauer des Druckprozesses in Form des freien Radikals vorliegt,
wobei die wenigstens eine Verbindung, die ein stabiles Radikal ist oder ein stabiles Radikal bildet, ein Photoinitiator ist, und
wobei die wenigstens eine Verbindung, die ein stabiles Radikal ist oder ein stabiles Radikal bildet, ausgewählt ist unter radikalischen organischen N-Oxiden, radikalischen anorganischen N-Oxiden, Kohlenstoffradikalen und radikalischen organischen Stickstoffverbindungen, insbesondere Hexaarylbisimidazolen (HABI).

## Claims

1. A method of printing comprising the steps of
i) providing a substrate,
ii) printing a first layer on the substrate provided in step i) using a first printing medium by means of inkjet printing,
iii) irradiating the first layer printed in step ii) with UV radiation to effect at least partial curing of said first layer,
iv) printing at least one further layer on the first layer at least partially cured in step iii) using a second printing medium by means of inkjet printing, wherein the second printing medium does not essentially comprise a photoinitiator, and
v) irradiating the at least one further layer printed in step iv) with UV radiation to effect curing of said at least one further layer,
**characterized in that**
the first printing medium comprises at least one compound which is a stable radical or forms a stable radical,
wherein the stable radical is present in the form of the free radical at least for the duration of the printing process,
wherein the at least one compound which is a stable radical or forms a stable radical is a photoinitiator, and
wherein the at least one compound which is a stable radical or forms a stable radical is selected from radical organic N-oxides, carbon radicals and radical organic nitrogen compounds.

2. Method according to claim 1, wherein the at least one compound that is a stable radical or forms a stable radical is selected under hexaarylbisimidazoles (HABI).

3. Method according to one of the previous claims, wherein the second printing medium does not essentially comprise a compound that is a stable radical or that forms a stable radical.

4. Method according to one of the previous claims, wherein the first layer in step ii) is printed over the entire surface of the substrate and the at least one further layer in step iv) is printed in the form of at least two adjacent or overlapping webs on the first layer applied over the entire surface and at least partially cured by means of inkjet printing.

5. Method according to one of the previous claims, wherein the second printing medium is a UV-curable inkjet ink which does not essentially comprise a photoinitiator.

6. Method according to one of the previous claims, wherein the first layer in step ii) is printed over the entire surface of the substrate and the at least one further layer in step iv) is printed in the form of at least two adjacent or overlapping webs on the first layer applied over the entire surface and at least partially cured by means of inkjet printing.

7. Use of an at least partially cured layer comprising at least one compound which is a stable radical or forms a stable radical on a substrate as a base for printing at least two webs of UV curable inkjet ink by means of inkjet printing, wherein the at least two webs are adjacent or overlapping, wherein the UV curable inkjet ink does not essentially comprise a photoinitiator,
wherein the stable radical is present in the form of the free radical at least for the duration of the printing process,
wherein the at least one compound which is a stable radical or forms a stable radical is selected from radical organic N-oxides, radical inorganic N-oxides, carbon radicals and radical organic nitrogen compounds, in particular hexaarylbisimidazoles (HABI).

## Revendications

1. Procédé d'impression comprenant les étapes consistant à
i) mettre un support à disposition,
ii) imprimer une première couche sur le support fourni à l'étape i) en utilisant un premier support d'impression par impression à jet d'encre,
iii) irradier la première couche imprimée à l'étape ii) avec un rayonnement UV afin de provoquer un durcissement au moins partiel de ladite première couche,
iv) imprimer au moins une couche supplémentaire sur la première couche au moins partiellement durcie à l'étape iii) en utilisant un second support d'impression par mpression à jet d'encre, le second support d'impression étant pratiquement exempt de photo-initiateur, et
v) irradier la couche supplémentaire au moins imprimée à l'étape iv) avec un rayonnement UV pour provoquer le durcissement de cette couche supplémentaire au moins,
**caractérisé en ce**
**que** le premier média d'impression comprend au moins un composé qui est un radical stable ou qui forme un radical stable, pour lequel le radical stable est présent sous la forme du radical libre au moins pendant la durée du processus d'impression, pour lequel le composé au moins, qui est un radical stable ou qui forme un radical stable, est un photo-initiateur, et pour lequel le composé au moins, qui est un radical stable ou qui forme un radical stable, est choisi parmi les N-oxydes organiques radicalaires, les radicaux de carbone et les composés organiques azotés radicalaires.

2. Procédé selon la revendication 1, pour lequel le composé au moins, qui est un radical stable ou qui forme un radical stable, est sélectionné parmi les hexaarylbisimidazoles (HABI).

3. Procédé selon l'une des revendications précédentes, dans lequel le deuxième média d'impression ne comprend pour l'essentiel aucun composé qui soit un radical stable ou qui forme un radical stable.

4. Procédé selon l'une des revendications précédentes, pour lequel on imprime la première couche sur toute la surface du support à l'étape ii) et on imprime l'autre couche au moins à l'étape iv) sous la forme d'au moins deux bandes contiguës ou se chevauchant sur la première couche appliquée sur toute la surface et au moins partiellement durcie, au moyen d'une impression à jet d'encre.

5. Procédé selon l'une des revendications précédentes, dans lequel le second média d'impression est une encre pour jet d'encre durcissable aux UV, qui est pratiquement exempte de photo-initiateur.

6. Procédé selon l'une des revendications précédentes, pour lequel on imprime la première couche sur toute la surface du support à l'étape ii) et on imprime l'autre couche au moins à l'étape iv) sous la forme d'au moins deux bandes contiguës ou se chevauchant sur la première couche appliquée sur toute la surface et au moins partiellement durcie, au moyen d'une impression à jet d'encre.

7. Utilisation d'une couche au moins partiellement durcie comprenant au moins un composé qui est un radical stable ou qui forme un radical stable sur un support en tant que base pour l'impression d'au moins deux bandes d'encre pour jet d'encre durcissable aux UV par impression à jet d'encre, les deux bandes au moins étant contiguës ou se chevauchant, pour laquelle l'encre pour jet d'encre durcissable aux UV est pratiquement exempte de photo-initiateur, le radical stable étant présent sous la forme du radical libre au moins pendant la durée du processus d'impression, le composé au moins qui est un radical stable ou qui forme un radical stable étant choisi parmi les N-oxydes organiques radicalaires, les N-oxydes inorganiques radicalaires, les radicaux carbone et les composés organiques azotés radicalaires, notamment les hexaarylbisimidazoles (HABI).
